# EUROPEAN PATENT APPLICATION

(11) **EP 2 112 583 A1**
(43) Date of publication of application: **28.10.2009**
(21) Application number: 09158031.6
(22) Date of filing: 16.04.2009
(51) Int. Cl.: G06F 3/048

(54) **Method and apparatus for adjusting display area of user interface and recording medium using the same**

(30) Priority: 22.04.2008 TW 97114715
(71) Applicant: HTC Corporation, Taoyuan County 330 (TW)
(72) Inventor: Bamford, Drew, Taoyuan County, 330 (US)
(74) Representative: Becker Kurig Straus

(57) **Abstract**

A method and an apparatus (500) for adjusting a display area (300) of a user interface (310,320), and a recording medium using the same are provided. In this method, a first user interface (310) and a second user interface (320) are displayed on a touch screen of a portable electronic device. The first user interface (310) is located in a first direction side of the second user interface (320) and the second user interface (320) is located in a second direction side of the first user interface (310). Then, the touch screen (300) detects a touch signal (a). When the touch signal is moved toward the first direction (310), the display area of the second user interface (320) is enlarged (b). When the touch signal is moved toward the second direction (320), the display area of the first user interface (310) is enlarged. Accordingly, the size of the display area of the first (310) and the second user interface (320) can be adjusted by the user.

## Description

### BACKGROUND OF THE APPLICATION

In order to catch up with the quick pace for the modem life of the mass, various portable electronic devices that can be conveniently taken along without occupying a large space have been increasingly developed. For example, a personal digital assistant (PDA) phone not only provides various functions of a conventional communication device, but also enables a user to write a document, send/receive E-mails, browse networks, or use instant messaging software through a built-in windows operation system. That is to say, the portable electronic device may not only be used to make a call, but further provide various diversified functions like a small personal computer. With the rapid progress of the wireless network technique, the applications of such functions are no longer limited by time and space. As for the modern people who stress on efficiency, such communication device has become one of the indispensable tools.

However, considering the outlay requirements for the portable electronic device of being light, thin, short, and small, the volume of the device is quite limited. If it intends to dispose both a screen and a keyboard on the device, the size of the screen has to be reduced. In order to configure a larger screen within a limited space, recently, a touch screen has been developed. The touch screen with a keyboard integrated therein serves as an input interface for the portable electronic device, so as to save the cost for configuring the conventional keyboard and reduce the occupied area.

However, the touch screen of a portable electronic device is still limited in terms of size, so that the common design of the user interface is one user interface corresponding to one function is displayed on a screen in most cases. Although two user interfaces are displayed on the same screen at the same time in a few cases, the size of the display area of the two user interfaces cannot be adjusted and thus a problem often occurs that one of the display areas is not large enough for viewing or operating more data contents, which is inconvenient for the user.

### SUMMARY OF THE APPLICATION

Accordingly, the present application is directed to a method for adjusting a display area of a user interface, in which the size of the display area of the user interface is appropriately adjusted through touch actions of the user so as to provide the user with a larger space for viewing or operating.

The present application provides an apparatus for adjusting a display area of a user interface, in which two or more user interfaces are configured on the screen, and the user interface which the user is viewing or operating is enlarged to facilitate the viewing or operating ofthe user.

As broadly described and embodied herein, the present application provides a method for adjusting a display area of a user interface, which is adapted to a portable electronic device having a touch screen, and comprises the following steps. First, a first user interface and a second user interface are displayed. The first user interface is in a first direction side of the second user interface, and the second user interface is in the second direction side of the first user interface. Then, the touch screen is used to detect a touch signal. The display area of the second user interface is enlarged when the touch signal is moved toward the first direction, and the display area of the first user interface is enlarged when the touch signal is moved toward the second direction.

In an embodiment of the present application, the display area of the first user interface is reduced when the touch signal is moved toward the first direction.

In an embodiment of the present application, the display area of the second user interface is reduced when the touch signal is moved toward the second direction.

In an embodiment of the present application, the first user interface is changed into a simplified interface when the touch signal is moved toward the first direction.

In an embodiment of the present application, the second user interface is further changed into a simplified interface when the touch signal is moved toward the second direction.

In an embodiment of the present application, the first user interface corresponds to a first function and the second user interface corresponds to a second function.

In an embodiment of the present application, the step of enlarging the display area of the first user interface or the second user interface further comprises calculating the displacement of the touch signal, and determining an enlargement scale of the display area of the first user interface or the second user interface based on the displacement.

In an embodiment of the present application, the step of enlarging the display area of the first user interface or the second user interface further comprises determining whether the displacement of the touch signal exceeds a first predetermined value, and enlarging the display area of the first user interface or the second user interface when the displacement of the touch signal exceeds the first predetermined value.

In an embodiment of the present application, the step of detecting the touch signal by the touch screen further comprises determining whether the time length during which the touch signal stays in the first user interface or the second user interface exceeds a second predetermined value, and enlarging the display area of the first user interface or the second user interface when the time length of the touch signal exceeds the second predetermined value.

In an embodiment of the present application, when the touch signal is moved toward the first direction, the method further comprises determining whether the start point of the touch signal is in the display area of the second user interface. If so, the display area of the second user interface is enlarged; and if not, no actions are executed.

In an embodiment of the present application, when the touch signal is moved toward the second direction, the method further comprises determining whether the start point of the touch signal is in the display area of the first user interface. If so, the display area of the first user interface is enlarged; and if not, no actions are executed.

In an embodiment of the present application, when the touch signal is moved toward the first direction, the method further comprises determining whether the start point of the touch signal is in the display area of the second user interface and whether the end point of the touch signal is in the display area of the first user interface. If so, the display area of the second user interface is enlarged; and if not, no actions are executed.

In an embodiment of the present application, when the touch signal is moved toward the second direction, the method further comprises determining whether the start point of the touch signal is in the display area of the first user interface and whether the end point of the touch signal is in the display area of the second user interface. If so, the display area of the first user interface is enlarged; and if not, no actions are executed.

In an embodiment of the present application, the step of enlarging the display area of the first user interface or the second user interface further comprises enlarging the display area of the first user interface or the second user interface when the touch signal terminates.

In an embodiment of the present application, the portable electronic device comprises one of a cell phone, a PDA, and a PDA phone.

The present application provides an apparatus for adjusting a display area of the user interface, which comprises a touch screen, a first display module, a second display module, and an adjusting module. The touch screen is used to detect a touch signal. The first display module is used to display a first user interface on the touch screen and the second display module is used to display a second user interface on the touch screen. The first user interface is in a first direction side of the second user interface and the second user interface is in a second direction side of the first user interface. The adjusting module is used to adjust the size of the display area of the first user interface and the second user interface according to the touch signal detected by the touch screen. The display area of the second user interface is enlarged when the touch signal is moved toward the first direction and the display area of the first user interface is enlarged when the touch signal is moved toward the second direction.

In an embodiment of the present application, the adjusting module further comprises reducing the display area of the first user interface when the touch signal is moved toward the first direction.

In an embodiment of the present application, the adjusting module further comprises reducing the display area of the second user interface when the touch signal is moved toward the second direction.

In an embodiment of the present application, the adjusting module further comprises changing the first user interface into a simplified interface when the touch signal is moved toward the first direction.

In an embodiment of the present application, the adjusting module further comprises changing the second user interface into a simplified interface when the touch signal is moved toward the second direction.

In an embodiment of the present application, the first user interface corresponds to a first function and the first display module performs the first function according to the touch signal. The second user interface corresponds to a second function and the second display module performs the second function according to the touch signal.

In an embodiment of the present application, the adjusting module further comprises calculating the displacement of the touch signal, and determining the enlargement scale of the display area of the first user interface or the second user interface based on the displacement.

In an embodiment of the present application, the adjusting module further comprises determining whether the displacement of the touch signal exceeds a first predetermined value, and enlarging the display area of the first user interface or the second user interface when the displacement of the touch signal exceeds the first predetermined value.

In an embodiment of the present application, the adjusting module further comprises determining whether the time length during which the touch signal stays in the touch screen exceeds a second predetermined value, and enlarging the display area of the first user interface or the second user interface when the time length during which the touch signal stays exceeds the second predetermined value.

In an embodiment of the present application, when the touch signal is moved toward the first direction, the adjusting module further comprises determining whether the start point of the touch signal is in the display area of the second user interface. If so, the display area of the second user interface is enlarged; and if not, no actions are executed.

In an embodiment of the present application, when the touch signal is moved toward the second direction, the adjusting module further comprises determining whether the start point of the touch signal is in the display area of the first user interface. If so, the display area of the first user interface is enlarged; and if not, no actions are executed.

In an embodiment of the present application, when the touch signal is moved toward the first direction, the adjusting module further comprises determining whether the start point of the touch signal is in the display area of the second user interface and whether the end point of the touch signal is in the display area of the first user interface. If so, the display area of the second user interface is enlarged; and if not, no actions are executed.

In an embodiment of the present application, when the touch signal is moved toward the second direction, the adjusting module further comprises determining whether the start point of the touch signal is in the display area of the first user interface and whether the end point of the touch signal is in the display area of the second user interface. If so, the display area of the first user interface is enlarged; and if not, no actions are executed.

In an embodiment of the present application, the step of enlarging the display area of the first user interface or the second user interface further comprises enlarging the display area of the first user interface or the second user interface when the touch signal terminates.

In an embodiment of the present application, the adjust apparatus is adapted to be disposed in a portable electronic device, and the portable electronic device comprises one of a cell phone, a PDA, and a PDA phone.

The present application provide a recording medium for recording a computer program which includes a plurality of program codes adapted to be loaded into a portable electronic device and enable the portable electronic device to perform a method for adjusting a display area of the user interface. The method comprises the following steps. First, a first user interface and a second user interface are displayed. The first user interface is in the first direction side of the second user interface and the second user interface is in the second direction side of the first user interface. Then, a touch signal is detected by a touch screen of the portable electronic device. The display area of the second user interface is enlarged when the touch signal is moved toward the first direction, and the display area of the first user interface is enlarged when the touch signal is moved toward the second direction.

The present application adopts a structure of two or more user interfaces configured on a screen, in which based on the touch action of the user, the display area of the user interface to be viewed or operated is enlarged while the user interface that is not used is reduced or simplified, so as to provide the flexibility for the user to view or operate two or more user interfaces simultaneously on the same screen.

To make the above and other objectives, features, and advantages of the present application more apparent, a detail description with respect to the embodiments are made below in conjunction with the accompanying drawings.

### BRIEF DESCRIPTION OF THE DRAWINGS

The accompanying drawings are included to provide a further understanding of the application, and are incorporated in and constitute a part of this specification. The drawings illustrate embodiments of the application and, together with the description, serve to explain the principles of the application.

FIG. 1 shows a configuration diagram of a user interface according to an embodiment ofthe present application.

FIG. 2 shows a flowchart of a method for adjusting a display area of the user interface according to an embodiment ofthe present application.

FIGs. 3(a), 3(b), and 3(c) show schematic views of a method for adjusting a display area of a user interface according to an embodiment of the present application.

FIG. 4(a) and 4(b) show schematic views of a method for adjusting a display area of a user interface according to an embodiment of the present application.

FIG. 5 shows a block diagram of an apparatus for adjusting a display area of a user interface according to an embodiment ofthe present application.

### DESCRIPTION OF THE EMBODIMENTS

Reference will now be made in detail to the present embodiments of the application, examples of which are illustrated in the accompanying drawings. Wherever possible, the same reference numbers are used in the drawings and the description to refer to the same or like parts.

In order to display two or more user interfaces simultaneously on a screen, the present application provides a new method, which is capable of enlarging the display area of the user interface which the user wants to operate by dynamically adjusting proportions between the user interfaces based on conditions such as the time, manner, and the dragging direction that the user touches the screen and reducing the rest part of the screen so as to achieve the effect of viewing or operating a plurality of user interfaces and flexibly adjusting the viewing or operating space. The present application is a method and an apparatus for adjusting a display area of the user interface and a recording medium using the same developed based on the above concept. To make the content of the present application more comprehensive, some embodiments are provided as examples for the implementation of the present application.

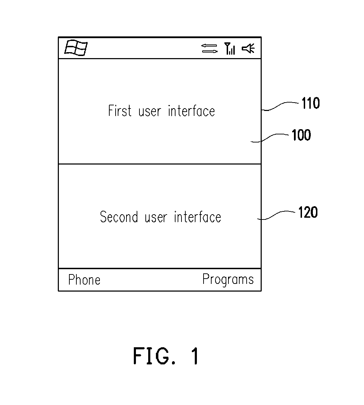

FIG. 1 shows a configuration diagram of a user interface according to an embodiment of the present application. Referring to FIG. 1, in the present embodiment, a first user interface 110 and a second user interface 120 are configured on a touch screen 100 of a portable electronic device. The user interfaces respectively comprise, but not limited to, a standby function, a clock function, a contact function, a messaging function, an email function, a camera function, a music function, a network function, a weather function, a calendar function, and a setting function, etc. It should be emphasized that two user interfaces are simultaneously displayed here only by way of example and are not intended to limit the scope of the present application, and those skilled in the art may use two or more user interfaces.

Based on the above configuration architecture of the user interfaces, the present application provides a corresponding adjusting method, which enables the user to swiftly adjust the size of the display area of the user interface, and will be described in detail in the following embodiment.

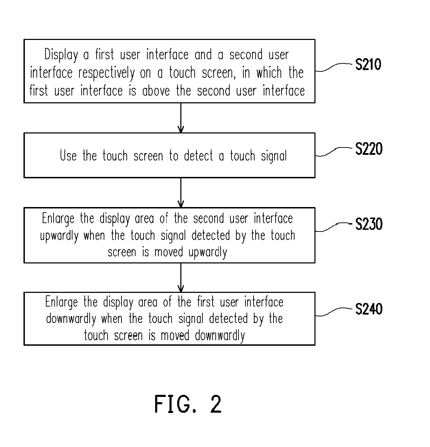

FIG. 2 shows a flowchart of a method for adjusting a display area of a user interface according to an embodiment of the present application. Referring to FIG.2, the present embodiment is adapted to a portable electronic device having a touch screen which is, for example, but not limited to, a cell phone, a PDA, or a PDA phone. The method comprises the following steps.

First, a first user interface and a second user interface are displayed on the touch screen by a portable electronic device (step S210). For example, the user interfaces are configured in the manner as shown in FIG. 1. That is to say, the first user interface is disposed on the upper side of the screen, i.e., the first user interface is above the second user interface. The second user interface is disposed on the downer side of the screen, i.e., the second user interface is beneath the first user interface. However, the configuration is not limited thereto in practical application, and those skilled in the art may also configure the display areas of the two user interfaces in a left and right manner or in other proportions.

Then, a touch signal from the user is detected by the portable electronic device using the touch screen (step S220). When the touch screen detects that the touch signal is moved upward, the portable electronic device enlarges the display area of the second user interface upwardly (step S230). When the touch screen detects that the touch signal is moved downward, the portable electronic device enlarges the display area of the first user interface downwardly (step S240).

In detail, when the user touches the display area of the screen and moves upwardly by dragging, which intuitively represents that the user wants to enlarge the second user interface, the portable electronic device also enlarges the second user interface upwardly, i.e., toward the direction of the first user interface. When the user touches the display area of the screen and moves downwardly by dragging, which intuitively represents that the user wants to enlarge the first user interface, the portable electronic device enlarges the first user interface downwardly, i.e., toward the direction ofthe second user interface.

The increased dimension of one user interface may possibly compress the display area of the other user interface. At this time, the portable electronic device reduces the display area of the other user interface or changes it into a simplified interface in accordance with the change in the configuration of the display areas.

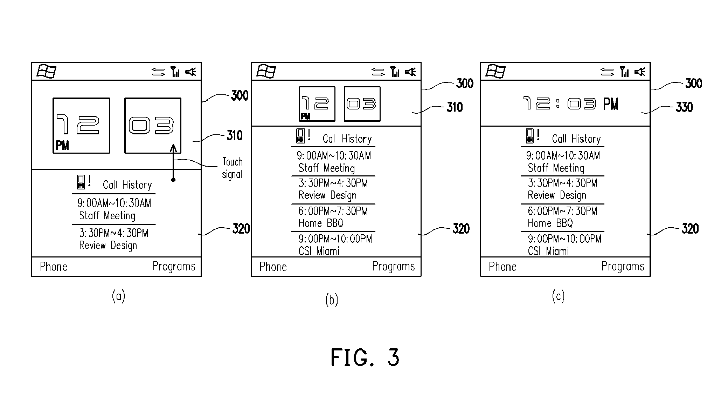

For example, FIGs. 3(a), 3(b), and 3(c) show schematic views of a method for adjusting a display area of a user interface according to an embodiment of the present application. First, referring to FIG. 3(a), the present embodiment adopts the configuration architecture of the user interface as shown in FIG. 1 and comprises a first user interface 310 corresponding to a clock function and a second user interface 320 corresponding to a calendar function, which are respectively configured on the touch screen 300 of the portable electronic device.

When a user wants to browse the contents in the calendar and needs a larger space for browsing, he/she may touch the display area of the screen and drag it toward the direction of the first user interface 310. At this time, the portable electronic device also enlarges the display area of the second user interface 320 toward the direction of the first user interface 310. By contrast, the display area of the first user interface 310 may be compressed by the second user interface 320 so as to be reduced in size (as shown in FIG. 3(b)) or converted into a simplified clock interface 330 (as shown in FIG. 3(c)). Finally, the user can obtain a larger space for browsing more contents in the calendar.

It should be noted that during the above process of detecting the touch signal by the touch screen, the portable electronic device further calculates the displacement of the touch signal and determines an enlargement scale of the display area of the user interface based on the displacement. The enlargement scale may be, but not limited to, the displacement multiplied by any proportion. In this way, the user may change the size of the display area of the user interface at will to a dimension for comfortable viewing or operating by changing the length of dragging.

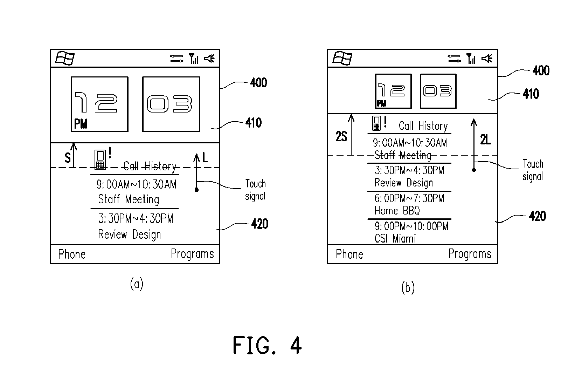

For example, FIGs. 4(a) and 4(b) show schematic views of a method for adjusting a display area of a user interface according to an embodiment of the present application. First, referring to FIG. 4(a), the present embodiment adopts the configuration architecture of the user interface as shown in FIG. 1 and comprises a first user interface 410 corresponding to the clock function and a second user interface 420 corresponding to the calendar function, which are respectively configured on the touch screen 400 of the portable electronic device.

When the user touches the display area of the screen and drags toward the direction of the second user interface 420 for a length of L, the portable electronic device enlarges the display area of the first user interface 410 toward the same direction for a length of S (as shown in FIG. 4(a)). On the other hand, when the user continues to drag toward the direction of the first user interface 410 for a length up to 2L, the portable electronic device accordingly enlarges the display area of the first user interface 410 for a length of 2S (as shown in FIG. 4(b)).

In an embodiment of the present application, it may be determined whether to enlarge the display area of the user interface based on the displacement of the touch signal. The displacement of the touch signal is compared with a first predetermined value, and the display area of the user interface is enlarged when the displacement of the touch signal exceeds the first predetermined value. In this way, the mistaken operations of the user on the screen will not cause the portable electronic device to act mistakenly.

In another embodiment of the present application, it is determined whether to enlarge the display area of the user interface based on the stay time of the touch signal. It is first determined whether the time length during which the touch signal stays in the user interface exceeds a second predetermined value, and the display area of the user interface is enlarged when the time length exceeds the second predetermined value. In brief, the display area of the user interface will not be enlarged unless the user presses and holds the screen for a period of time and then drags. In this way, the mistaken operations of the user on the screen will not cause the portable electronic device to act mistakenly, and meanwhile, the function of enlarging the display area of the user interface may be differentiated from the normal operation functions of the user interface.

In still another embodiment of the present application, it is determined whether to enlarge the display area of the user interface based on the position of the start point of the touch signal, i.e. based on whether the touch signal starts to move from the display area of the user interface to be enlarged. For example, when the touch signal is moved upwardly, it is determined whether the start point of the touch signal is in the display area of the second user interface. If so, the display area of the second user interface is enlarged; and if not, no actions are executed. For example, when the touch signal is moved downwardly, it is also determined whether the start point of the touch signal is in the display area of the first user interface. If so, the display area of the first user interface is enlarged; and if not, no actions are executed. In this way, the mistaken operations of the user on the screen will not cause the portable electronic device to act mistakenly, and meanwhile, the enlarging function may be differentiated from the normal operation functions of the user interface.

In another the embodiment of the present application, it is determined whether to enlarge the display area of the user interface based on the position of the start point and end point of the touch signal i.e. based on whether the touch signal is moved from the display area of one user interfaces to the display area of the other user interface. The display area of the user interface is not enlarged until the touch signal is moved to the display area of the other user interface. For example, when the touch signal is moved upwardly, it is determined whether the start point of the touch signal is in the display area of the second user interface and whether the end point of the touch signals is in the display area of the first user interface. If so, the display area of the second user interface is enlarged; and if not, no actions are executed. Also, for example, when the touch signal is moved downwardly, it is determined whether the start point of the touch signal is in the display area of the first user interface and whether the end point of the touch signals is in the display area of the second user interface. If so, the display area of the first user interface is enlarged; and if not, no actions are executed. Likewise, in this way, the mistaken operations of the user on the screen will not cause the portable electronic device to act mistakenly, and meanwhile, the enlarging function may be differentiated from the normal operation functions of the user interface.

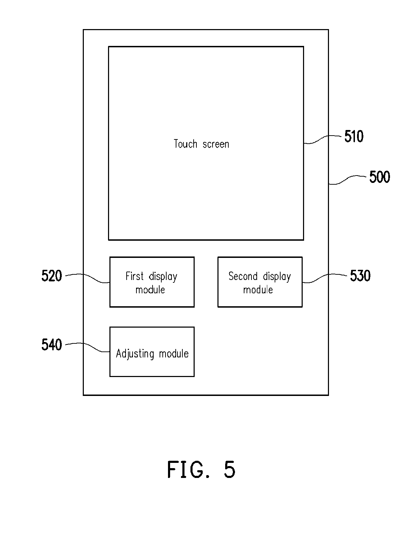

In another embodiment of the present application, the adjusting method is implemented in a physical apparatus, which is described in detail in still another embodiment. FIG. 5 shows a block diagram of an apparatus for adjusting a display area of the user interface according to an embodiment of the present application. Referring to FIG. 5, the adjusting apparatus 500 in the present embodiment is, for example, configured in a portable electronic device such as a cell phone, a PDA, or a PDA phone for adjusting a display area of the user interface of the portable electronic device. The adjusting apparatus 500 comprises a touch screen 510, a first display module 520, a second display module 530, and an adjusting module 540, and the functions thereof will be respectively described as follows.

The touch screen 510 is used to detect the touch action of the user and generates a corresponding touch signal. The first display module 520 is used to display a first user interface on the touch screen and the second display module 530 is used to display a second user interface on the touch screen.

In an embodiment of the present application, the first user interface corresponds to the first function and the first display module 520 performs a first function according to the touch signal detected by the touch screen 510. The second user interface corresponds to a second function and the second display module 530 performs a second function according to the touch signal detected by the touch screen 510. The first function and the second function comprise, but are not limited to, a standby function, a clock function, a contact function, a messaging function, an email function, a camera function, a music function, a network function, a weather function, a calendar function, and a setting function, etc.

The adjusting module 540 adjusts the size of the display area of the first user interface and the second user interface according to the touch signal detected by the touch screen 510. The user interface is, for example, configured in the manner as shown in FIG. 1. The first user interface is disposed on the upper side of the touch screen 510, i.e., the first user interface is above the second user interface. The second user interface is disposed on the downer side of the touch screen 510, i.e., the second user interface is beneath the first user interface. However, the configuration is not limited thereto in practical application, and those skilled in the art may also configure the display areas of the two user interfaces in a left and right manner or in other proportions. When the touch screen 510 detects that the touch signal is moved upwardly, the adjusting module 540 enlarges the display area of the second user interface upwardly. When the touch screen 510 detects that the touch signal is moved downwardly, the adjusting module 540 enlarges the display area of the first user interface downwardly. In an embodiment of the present application, when the user interface is enlarged, the adjusting module 540 reduces the display area of the other user interface or changes it into a simplified interface in accordance with the change in the configuration of the display area.

It should be noted that in other embodiments of the present application, the adjusting module 540 further determines whether to enlarge the display area of the user interface based on parameters such as the displacement, stay time, and position of the touch signal. In this way, the mistaken operations of the user on the screen will not cause the portable electronic device to act mistakenly. Those manners have been described in detail in the above embodiments, and will not be described here again.

The present application further provides a recording medium such as an optic disk, a magnetic disk, and a removable hard disk for recording a computer-readable authorization sign-off program so as to perform the method for adjusting a display area of the user interface as described above. Here, the authorization sign-off program recorded in the recording medium is basically composed of a plurality of program code segments such as program code segments for establishing an organization chart, sign-off form program code segments, setting program code segments, and deployment program code segments. The functions of those program code segments correspond to the steps of the above adjusting method and the functional block diagram of the above apparatus.

To sum up, in the method and apparatus for adjusting a display area of a user interface and a recording medium using the same according to the present application, a larger viewing or operating space may be provided for the user through configuring the user interfaces of two or more functions on the screen and enlarging the display area of the current user interface to be operated according to the touch actions of the user. In addition, the present application further comprises determining whether to enlarge the display area of the user interface based on parameters such as the displacement, stay time, and position of the touch signal. In this way, the mistaken operations of the user on the screen will not cause the portable electronic device to act mistakenly.

It will be apparent to those skilled in the art that various modifications and variations can be made to the structure of the present application without departing from the scope or spirit of the application. In view of the foregoing, it is intended that the present application cover modifications and variations of this application provided they fall within the scope of the following claims and their equivalents.

## Claims

1. A method for adjusting a display area of a user interface, adapted to a portable electronic device having a touch screen, comprising:
displaying a first user interface and a second user interface on the touch screen, wherein the first user interface is in a first direction side of the second user interface and the second user interface is in a second direction side of the first user interface;
detecting a touch signal by the touch screen;
enlarging the display area of the second user interface when the touch signal is moved toward the first direction; and
enlarging the display area of the first user interface when the touch signal is moved toward the second direction.

2. The method for adjusting a display area of a user interface according to claim 1, wherein,
when the touch signal is moved toward the first direction, the method further comprising the step of reducing the display area of the first user interface; and
when the touch signal is moved toward the second direction, the method further comprising the step of reducing the display area of the second user interface.

3. The method for adjusting a display area of a user interface according to claim 1 or 2, when the touch signal is moved toward the first direction, the method further comprising:
changing the first user interface into a simplified interface.

4. The method for adjusting a display area of a user interface according to any one of claims 1 to 3, wherein the first user interface corresponds to a first function and the second user interface corresponds to a second function.

5. The method for adjusting a display area of a user interface according to claim 1 or 2, wherein the step of enlarging the display area of the first user interface or the second user interface comprises:
calculating a displacement of the touch signal; and
determining an enlargement scale of the display area of the first user interface or the second user interface based on the displacement.

6. The method for adjusting a display area of a user interface according to any one of claims 1 to 3, wherein the step of enlarging the display area of the first user interface or the second user interface comprises:
calculating a displacement of the touch signal;
determining whether the displacement of the touch signal exceeds a first predetermined value; and
enlarging the display area of the first user interface or the second user interface when the displacement of the touch signal exceeds the first predetermined value.

7. The method for adjusting a display area of a user interface according to any one of claims 1 to 3, wherein the step of detecting the touch signal by the touch screen further comprises:
determining whether a time length during which the touch signal stays in the touch screen exceeds a second predetermined value; and
enlarging the display area of the first user interface or the second user interface when the time length of the touch signal exceeds the second predetermined value.

8. The method for adjusting a display area of a user interface according to any one of claims 1 to 7, when the touch signal is moved toward the first direction, the method further comprising:
determining whether a start point of the touch signal is in the display area of the second user interface;
if so, enlarging the display area of the second user interface; and
if not, executing no actions.

9. The method for adjusting a display area of a user interface according to any one of claims 1 to 7, when the touch signal is moved toward the second direction, the method further comprising:
determining whether a start point of the touch signal is in the display area of the first user interface;
if so, enlarging the display area of the first user interface; and
if not, executing no actions.

10. The method for adjusting a display area of a user interface according to any one of claims 1 to 7, when the touch signal is moved toward the first direction, the method further comprising:
determining whether a start point of the touch signal is in the display area of the second user interface and whether an end point of the touch signal is in the display area of the first user interface;
if so, enlarging the display area of the second user interface; and
if not, executing no actions.

11. An apparatus for adjusting a display area of a user interface, comprising:
a touch screen, for detecting a touch signal;
a first display module, for displaying a first user interface on the touch screen;
a second display module, for displaying a second user interface on the touch screen, wherein the first user interface is in a first direction side of the second user interface and the second user interface is in a second direction side of the first user interface; and
an adjusting module, for adjusting a size of the display area of the first user interface and the second user interface according to the touch signal detected by the touch screen, wherein
the display area of the second user interface is enlarged when the touch signal is moved toward the first direction, and the display area of the first user interface is enlarged when the touch signal is moved toward the second direction.

12. The apparatus for adjusting a display area of a user interface according to claim 11, wherein when the touch signal is moved toward the first direction, the adjusting module further comprises changing the first user interface into a simplified interface.

13. The apparatus for adjusting a display area of a user interface according to claim 11 or 12, wherein when the touch signal is moved toward the first direction, the adjusting module further determines whether a start point of the touch signal is in the display area of the second user interface, and if so, the display area of the second user interface is enlarged; and if not, no actions are executed.

14. The apparatus for adjusting a display area of a user interface according to claim 11 or 12, wherein when the touch signal is moved toward the first direction, the adjusting module further determines whether the start point of the touch signal is in the display area of the second user interface and whether an end point of the touch signal is in the display area of the first user interface, and if so, the display area of the second user interface is enlarged; and if not, no actions are executed.

15. A recording medium for recording a computer program, the computer program comprising a plurality of program codes adapted to be loaded into a portable electronic device and to enable the portable electronic device to perform the method for adjusting a display area of a user interface according to any one of claims 1 to 10.
